# EUROPÄISCHE PATENTANMELDUNG

(11) **EP 3 697 034 A1**
(43) Veröffentlichungstag der Anmeldung: **19.08.2020**
(21) Anmeldenummer: 19157163.7
(22) Anmeldetag: 14.02.2019
(51) Int. Cl.: H04L 12/715, G05B 19/418

(54) **VERFAHREN ZUR DATENÜBERTRAGUNG, GERÄT, COMPUTERPROGRAMM UND COMPUTERLESBARES MEDIUM**

(71) Anmelder: Siemens Aktiengesellschaft, 80333 München (DE)
(72) Erfinder: Chen, Feng, 90537 Feucht (DE); Götz, Franz-Josef, 91180 Heideck (DE); Kießling, Marcel, 91235 Velden (DE); Nguyen, An Ninh, 90427 Nürnberg (DE); Schmitt, Jürgen, 90766 Fürth (DE)

(57) **Zusammenfassung**

Die Erfindung betrifft ein Verfahren zur Datenübertragung in einem insbesondere industriellen Netzwerk (1) mit mehreren Netzwerkknoten (7-11), bei dem zwischen einem einen Stream-Initiator darstellenden Endgerät (T) und einer Mehrzahl von Stream-Teilnehmer darstellenden Endgeräten (L1-L12) insbesondere im Rahmen einer oder für eine Anwendung zyklisch Datenpakete (P) unter Nutzung wenigstens einer geschützten Verbindung (V1-V3) zu übertragen sind, wobei Topologie-Informationen (13) bereitgestellt werden, welche die Positionen der Stream-Teilnehmer (L1-L12) im Netzwerk (1) angeben oder von denen diese ableitbar sind, und die Stream-Teilnehmer (L1-L12) in Abhängigkeit ihrer jeweiligen Position im Netzwerk (1) in zwei oder mehr Gruppen (G1-G4) mit jeweils zwei oder mehr Stream-Teilnehmern (L1-L12) aufgeteilt werden, und mehrere geschützte Verbindungen (V1-V3) eingerichtet werden, wobei jeder Gruppe (G1-G4) wenigstens eine geschützte Verbindung (V1-V3) zugeordnet wird, über die die Stream-Teilnehmer (L1-L12) der jeweilige Gruppe (G1-G4) Datenpakete (P) an den Stream-Initiator (T) senden oder Datenpakete (P) von dem Stream-Initiator (T) empfangen können oder empfangen. Darüber hinaus betrifft die Erfindung ein Gerät zur Durchführung eines solchen Verfahrens, ein Computerprogramm und ein computerlesbares Medium.

## Beschreibung

Die Erfindung betrifft ein Verfahren zur Datenübertragung in einem insbesondere industriellen Netzwerk mit mehreren Netzwerkknoten, bei dem zwischen einem einen Stream-Initiator darstellenden Endgerät und einer Mehrzahl von Stream-Teilnehmer darstellenden Endgeräten insbesondere im Rahmen einer oder für eine Anwendung zyklisch Datenpakete unter Nutzung wenigstens einer geschützten Verbindung zu übertragen sind. Darüber hinaus betrifft die Erfindung ein Gerät zur Durchführung eines solchen Verfahrens, ein Computerprogramm und ein computerlesbares Medium.

In der IEEE sind durch die Erweiterungen der Arbeitsgruppe TSN (Time-Sensitive Networking) periodische bzw. zyklische Übertragungen, so genannte Streams, im Netzwerk besonders geschützt. Die TSN-Arbeitsgruppe (Time Sensitive Networking Taskgroup) ist dabei eine Nachfolgegruppe der AVB-Arbeitsgruppe (Audio/Video Bridging Taskgroup). Zu TSN gehört eine Vielzahl von Standards, rein beispielhaft sei in diesem Zusammenhang genannt Zeitsynchronisation (IEEE 802.1 AS-REV), Framepreemption (IEEE 802.1 Qbu) und Reservierung (IEEE 802.1 Qca, IEEE 802.1 Qcc). Bekannt ist auch das Stream Reservation Protocol (SRP, siehe insbesondere IEEE 802.1 Qat), mit dem Übertragungsressourcen dynamisch reserviert werden können und es möglich wird, Latenzzeiten zu garantieren. Durch eine automatische Konfiguration von SRP kann für Streams mit einer erfolgreichen Reservierung insbesondere eine gesicherte Übertragung innerhalb einer bestimmten Maximalen Latenz garantiert werden.

Ein Sender wird im Rahmen von AVB bzw. TSN auch als Talker und ein Empfänger als Listener bezeichnet.

Jede Verbindung für jede Anwendung in einem Netzwerk, die zeitsensitiven Datenverkehr zwischen Endgeräten ermöglicht, muss registriert und reserviert werden, um vom Netzwerk Garantien für einen verlustfreien Transfer von Datenpaketen/- frames und eine pünktliche Lieferung zu erhalten. Das Netzwerk muss dafür die Verfügbarkeit von Netzwerkressourcen verifizieren und diese - sofern verfügbar - zuweisen, dies für jeden einzelnen Stream und es muss Zugang für Echtzeitdatenverkehr gewähren. Innerhalb des Netzwerkes, insbesondere innerhalb sämtlicher beteiligter Netzwerkknoten, muss die Kontrollinformation über Registrierung, Reservierung und Weiterleiteinformationen für jeden Stream gespeichert werden. Der Status von jeder Reservierung muss aufrechterhalten werden. Mit einer zunehmenden Anzahl von Streams in demselben Netzwerk wächst die Menge von Netzwerkkontrollinformationen an. Da die Speicher- und Verarbeitungsleistung von Netzwerkknoten - beispielsweise Bridges oder Switches - begrenzt ist, stellt dies ein erhebliches Skalierungsproblem dar.

In der Industrie werden einfache Endgeräte mit einer geringen Datenmenge vielfach von Bus-Technologien (beispielsweise PROFIBUS) auf Ethernet-basierte Systeme (beispielsweise PROFINET) angepasst. PROFINET (process field network) ist dabei der offene Industrial-Ethernet-Standard der PROFIBUS-Nutzerorganisation e. V. (PNO) für die Automatisierung. Die von den Geräten erzeugte Datenmenge bleibt jedoch gering.

Der Einsatz von standardisierten AVB- bzw. TSN-Mechanismen erfordert eine Adaption der Systeme.

Bei Streams ist eine periodische/zyklische Datenübertragung im Netzwerk - optional mit vielen Paketen im Netz - vorgesehen. Die dazu vorgesehene Datenmenge und kurze Periode für eine effektive Übertragung wird von typischen einfachen Endgeräten, beispielsweise Sensoren und/oder Aktoren der industriellen Automatisierungstechnik nicht annähernd erreicht.

Nach Kenntnisstand der Anmelderin wird die Datenübertragung im industriellen Bereich bisher oftmals nicht mit TSN geschützt. Vielmehr wird durch proprietäre Erweiterungen (beispielsweise PROFINET IRT, wobei PROFINET der offene Industrial-Ethernet-Standard der PROFIBUS-Nutzerorganisation e. V. (PNO) für die Automatisierung ist) beispielsweise ein Schedule für alle Übertragungen erstellt und dadurch ein gewisser Schutz für die geplante Anwendung im Netzwerk erhalten. Dafür müssen jedoch sämtliche Verbindungen beim Schedule berücksichtigt werden, was momentan durch die Beschränkung auf PROFINET und ein einziges Projekt in der Regel nicht möglich ist.

In der ebenfalls auf die Anmelderin zurückgehenden EP 3 432 097 A1 ist ein Mechanismus für eine effektive Abbildung von den Daten mehrerer Sender auf einen Stream offenbart. Auch eine Übertragung der Daten von einem Sender an mehrere Empfänger in einem Stream ist beschrieben. Bei der Datenübertragung wird ein Multiplexing durchgeführt, es werden jeweils Datenpakete für verschiedene Empfänger bzw. von verschiedenen Sendern im gleichen Stream übertragen. Die von verschiedenen Stream-Teilnehmern stammenden bzw. die für verschiedene Stream-Teilnehmer bestimmten Datenpakete/-frames eines Streams können dann auch als Streamlets betrachtet und bezeichnet werden. Zur Identifikation des eigentlichen Empfängers kann zusätzlich eine ID in den Datenpaketen enthalten sein. Auch eine Längeninformation wird vorteilhafter Weise hinzugefügt. Die ID kann z.B. bei PROFINET die Frame-ID sein, die insbesondere durch den jeweiligen Sender eingefügt wurde. Bei Feldbussystemen existieren für die einzelnen Empfänger ohnehin meist eindeutige IDs, die dann als (Streamlet-)ID im Streamlet verwendet werden können. Jeder Sensor bzw. Aktor sendet bzw. empfängt dann Daten in Form eines Streamlets in einem Stream. Dadurch können die von unterschiedlichen Teilnehmern stammenden oder für unterschiedliche Teilnehmer bestimmten Daten gemeinsam in einem Stream - jeweils zeitlich versetzt zueinander - übertragen werden. Durch die Sammlung von vielen Daten in einem Stream erfolgt eine deutlich effizientere Netzwerkauslastung im Vergleich zur Verwendung von einem Stream pro Gerät mit jeweils eigener Weiterleitung und Ressourcenreservierung aber nicht ausgenutzter Bandbreite.

In der auf die Anmelderin zurückgehenden europäischen Patentanmeldung der Anmeldenummer 18181209.0 ist eine Erweiterung auf der Dataplane für eine besonders effiziente Übertragung von Datenpaketen von mehreren Aktoren an eine zentrale Steuerung beschrieben.

Aus der weiteren auf die Anmelderin zurückgehenden europäischen Patentanmeldung mit der Anmeldenummer 18154319.0 ist eine Erweiterung eines Reservierungsprotokolls für eine automatische Konfiguration für ein Szenario mit mehreren Talkern und einem Listener beschrieben. Dadurch lassen sich beide Kommunikationsrichtungen einer industriellen Steuerung, konkret eine Datenübertragung von mehreren verteilten Aktoren an eine zentrale Steuereinheit sowie eine Übertragung von einer zentralen Steuereinheit an mehrere verteilte Sensoren effizient realisieren.

Es hat sich gezeigt, dass insbesondere im industriellen Umfeld die beteiligten Endgeräte, etwa eine Steuerung und Sensoren und/oder Aktoren räumlich verteilt und an verschiedenen Stellen im Netzwerk angeschlossen sein können. Oftmals liegt eine hierarchische Struktur mit einem übergeordneten Teilnetzwerk und mehreren Subnetzen, in denen Sensoren und/oder Aktoren liegen, vor. Beispielsweise kann ein Backbone-(Teil-)Netz vorliegen, mit dem mehrere Subnetze verbunden sind.

Die Aufgabe der vorliegenden Erfindung besteht darin, Möglichkeiten zu schaffen, mit vernünftigem Aufwand eine geschützte Kommunikation zwischen beteiligten Endgeräten insbesondere auch für solche Fälle zu schaffen.

Diese Aufgabe wird bei einem Verfahren der eingangs genannten Art dadurch gelöst, dass Topologie-Informationen bereitgestellt werden, welche die Positionen der Stream-Teilnehmer im Netzwerk angeben oder von denen diese ableitbar sind, und die Stream-Teilnehmer in Abhängigkeit ihrer jeweiligen Position im Netzwerk in zwei oder mehr Gruppen mit jeweils zwei oder mehr Stream-Teilnehmern aufgeteilt werden, und mehrere geschützte Verbindungen eingerichtet werden, wobei jeder Gruppe wenigstens eine geschützte Verbindung zugeordnet wird, über die die Stream-Teilnehmer der jeweilige Gruppe Datenpakete an den Stream-Initiator senden oder Datenpakete von dem Stream-Initiator empfangen können oder empfangen.

Erfindungsgemäß werden Topologie-Informationen, konkret Informationen, wo verteilte Endgeräte in bzw. an einem Netzwerk liegen, für den Erhalt einer optimierten Datenübertragung genutzt. Anhand der Topologie-Informationen können Streamlets optimiert in Streams "verpackt" werden. Endgeräte werden Topologie-abhängig gruppiert bzw. gruppenweise betrachtet und die Datenübertragung wird auf die Gruppen aufgeteilt, konkret werden mehrere geschützte Verbindungen für die Gruppen eingerichtet, über die dann jeweils die Datenübertragung zu den Teilnehmern in der Gruppe erfolgen kann.

Beispielsweise können diejenigen Endgeräte, die in einem unterlagerten Sub- bzw. Teilnetz eines gegebenen Netzwerkes liegen, jeweils als eine Gruppe betrachtet bzw. einer Gruppe zugeordnet werden. Sind mehrere unterlagerte Sub- bzw. Teilnetze vorhanden, erfolgt die Aufteilung in Gruppen bevorzugt gemäß den vorhandenen Teil-/Subnetzwerken.

Durch die erfindungsgemäße Berücksichtigung von Topologie-Informationen bei der Konfiguration von geschützten Verbindungen insbesondere durch eine Anwendung wird eine besonders effiziente Nutzung eines zur Verfügung stehenden Netzwerkes möglich. Unter Berücksichtigung der Position der Teilnehmer wird eine optimierte, besonders effiziente Bildung geschützter Verbindungen möglich. Da für mehrere Gruppen, die insbesondere an verschiedenen Stellen im Netzwerk angeschlossen sind, mehrere geschützte Verbindungen eingerichtet werden, muss nicht überall, insbesondere nicht an allen Knoten die für die Datenübertragung von oder zu allen Stream-Teilnehmern erforderliche Bandbreite reserviert werden. Liegt beispielsweise ein Netzwerk mit einem insbesondere besonders leistungsfähigen "Backbone"-(Teil-)Netzwerk und mehreren diesem unterlagerten Teilnetzwerken vor, kann das Datenaufkommen im Backbone-Netz zwischen den Teilnetzen deutlich reduziert werden.

Anhand der Gerätepositionen kann insbesondere in bzw. von der Anwendung, für welche die Daten zwischen dem Stream-Initiator und den Stream-Teilnehmern zu übertragen sind, die Aufteilung der Stream-Teilnehmer in Gruppen erfolgen und jeweils eine geschützte Verbindung für Endgeräte, die einer Gruppe angehören und insbesondere im gleichen Teilnetzwerk liegen, eingerichtet und Daten über diese übertragen werden.

Bei einer solchen Anwendung kann es sich beispielsweise um eine Steuerungsanwendung aus dem industriellen Bereich, etwa eine Steuerungsanwendung für eine industrielle (Automatisie-rungs-)Anlage handeln.

Alternativ oder zusätzlich ist es auch möglich, dass eine Konfigurationsanwendung die Aufteilung der Stream-Teilnehmer in Gruppen und die Einrichtung geschützter Verbindungen für diese abwickelt, etwa eine Konfigurationsanwendung, die in einem Netzwerk die Geräte für den Datenaustausch konfiguriert und die Kommunikationsverbindungen einrichtet, insbesondere, welche Endgeräte mit welchem oder welchen weiteren Endgeräten kommunizieren.

Durch die erfindungsgemäße Vorgehensweise wird - gegenüber der Nutzung jeweils einer geschützten Verbindung für jeden Sender/Empfänger - die zu speichernde Kontrollinformation deutlich reduziert. Die Ressourcen in den Netzwerkknoten, beispielsweise Bandbreite, Filter-Database-Einträge (abgekürzt FDB-Einträge), Queue-Speicher, Linkbandbreite, etc., können geschont werden. Insbesondere müssen im Reservierungsprotokoll und der Dataplane nur jeweils ein Eintrag für die jeweilige geschützte Verbindung verwaltet werden. In einem Fehlerfall vereinfacht sich die Diagnose, da eine geringere Anzahl geschützter Verbindungen geprüft werden muss.

Ein Beispiel einer geschützten Verbindung ist ein Stream, wie er von der Audio/Video Bridging (AVB) Task Group und insbesondere von der Time-Sensitive Networking (TSN) Task Group in der internationalen Norm IEEE 802.1 festgelegt ist. Ein Stream kann zwischen genau einem Sender (Talker) und genau einem Empfänger (Listener) eingerichtet sein. Es ist auch bekannt, einen Stream zwischen einem einzelnen Talker und mehreren Listenern einzurichten. Dies entspricht dem Standard-Prinzip, wie es von der AVB Task Group und insbesondere von der TSN Task Group in der Norm IEEE 802.1 festgelegt ist. Darüber hinaus ist es auch möglich, einen Stream zwischen mehreren Talkern und einem einzelnen Listener einzurichten, wie es insbesondere in der ebenfalls auf die Anmelderin zurückgehenden europäischen Patentanmeldung mit der Anmeldenummer 18154319.0 beschrieben ist. In beiden 1:n-Szenarien, also sowohl demjenigen mit einem Talker und mehreren Listenern als auch demjenigen mit mehreren Talkern und einem Listener, wird der Stream jeweils von dem einzelnen des 1:n-Szenarios also entweder dem einen Talker oder dem einen Listener angekündigt und somit initiiert. Ein Gerät, das einen Stream ankündigt/initiiert wird vorliegend auch als Stream-Initiator bezeichnet und die mehreren weiteren Geräte, die sich an einem angekündigten Stream anmelden können, als Stream-Teilnehmer.

Bei Netzwerkknoten kann es sich in hinlänglich bekannter Weise zum Beispiel um Bridges oder Switches handeln.

Eine geschützte Verbindung zeichnet sich insbesondere durch einen dieser zugeordneten eindeutigen Kenner, insbesondere einen Stream-Kenner bevorzugt in Form einer Stream-ID aus. Über Stream-Kenner können verschiedene geschützte Verbindungen, insbesondere Streams voneinander unterschieden werden. Die mehreren geschützten Verbindungen, die im Rahmen des erfindungsgemäßen Verfahrens anstelle nur einer geschützten Verbindung für alle Teilnehmer - für die mehreren Gruppen eingerichtet werden, werden sich entsprechend durch verschiedene Stream-Kenner, insbesondere Stream-IDs auszeichnen.

Die Gruppen mit jeweils zwei oder mehr Stream-Teilnehmern werden in der Regel an unterschiedlichen Stellen im Netzwerk angeschlossen sein, dies insbesondere über verschiedene Netzwerkknoten.

Auch kann es sein, dass die Stream-Teilnehmer wenigstens einer Gruppe einander räumlich näher liegen als den Stream-Teilnehmern wenigstens einer anderen Gruppe. Die Wahl der Gruppen bzw. die Aufteilung der Stream-Teilnehmer erfolgt zweckmäßiger Weise entsprechend.

Jeder Gruppe wird wenigstens eine geschützte Verbindung zugeordnet. Die Zuordnung kann derart sein, dass jeder Gruppe eine oder auch mehrere eigene geschützte Verbindung(en) zugeordnet werden, die ausschließlich von Stream-Teilnehmern der jeweiligen Gruppe genutzt werden. Auch ist es möglich, dass wenigstens eine der mehreren geschützten Verbindungen mehr als einer Gruppe zugeordnet ist. Dann erfolgt über wenigstens eine geschützte Verbindung eine Datenübertragung von oder zu den Stream-Teilnehmern aus mehr als einer Gruppe.

Gemäß einer besonders bevorzugten Ausführungsform des erfindungsgemäßen Verfahrens ist vorgesehen, dass jedem Stream-Teilnehmer bekannt ist oder gegeben wird, welcher Gruppe er angehört und/oder welche wenigstens eine geschützte Verbindung seiner Gruppe zugeordnet ist oder wird, und sich die Stream-Teilnehmer der jeweiligen Gruppe an wenigstens einer ihrer Gruppe zugeordneten geschützten Verbindungen anmelden. Dann kann weiterhin vorgesehen sein, dass jeder geschützten Verbindung ein eindeutiger Stream-Kenner zugeordnet ist oder wird und den Stream-Teilenehmern bekannt ist oder bekannt gegeben wird, welcher Stream-Kenner zu der wenigstens einen ihrer Gruppe zugeordneten geschützten Verbindung gehört. Die Anmeldung erfolgt dann zweckmäßiger Weise an wenigstens einer geschützten Verbindung mit einem der Gruppe zugeordneten Stream-Kenner. So können die Stream-Teilnehmer aus gegebenenfalls einer Vielzahl von im Netzwerk für verschiedene Gruppen angekündigten geschützten Verbindungen auf einfache Weise gezielt diejenige oder diejenigen zu ihrer Gruppe gehörige(n) auswählen und sich daran anmelden. Bevorzugt meldet sich jede Gruppe ggf. jedes Teilnetzwerk nur an einem Stream an, in dem Streamlets für die Endgeräte dieser Gruppe enthalten sind, was über entsprechende Kennungen identifizierbar ist.

Von dem Stream-Initiator kann für die Einrichtung der geschützten Verbindungen für die verschiedenen Gruppen für jede geschützte Verbindung wenigstens eine Ankündigungsnachricht gesendet werden, die im Netzwerk verteilt wird. Dies entspricht der aus dem Stand der Technik bzw. den AVB- sowie TSN-Standard vorbekannten Vorgehensweise, dass für einen Stream zunächst eine Ankündigungsnachricht mit einer StreamBeschreibung, beispielsweise ein sogenannter Talker Advertise (siehe IEEE 802.1), herausgegeben und im Netzwerk verteilt wird. Die wenigstens eine Ankündigungsnachricht für die jeweilige geschützte Verbindung umfasst dann bevorzugt einen dieser zugeordneten eindeutigen Stream-Kenner.

Die Einrichtung der geschützten Verbindungen umfasst weiterhin bevorzugt die Reservierung von Netzwerkressourcen an beteiligten Netzwerkknoten. Die Reservierung erfolgt bevorzugt unter Verwendung eines Reservierungsprotokolls. Dies entspricht dem aus dem Stand der Technik vorbekannten Prinzip, wie es insbesondere von der AVB Task Group und insbesondere von der TSN Task Group in der Norm IEEE 802.1 festgelegt ist.

Das Netzwerk ist bevorzugt hierarchisch strukturiert, weist insbesondere mehrere hierarchischen Ebenen auf. Das Netzwerk kann zwei oder mehr unterlagerte Teilnetzwerke und wenigstens ein den unterlagerten Teilnetzwerken übergeordnetes Teilnetzwerk umfassen, wobei in zwei oder mehr der unterlagerten Teilnetzwerke jeweils zwei oder mehr der Stream-Teilnehmer liegen. Dann werden bevorzugt jeweils diejenigen Stream-Teilnehmer, die in einem unterlagerten Teilnetzwerk liegen, zu einer Gruppe zusammengefasst. Sind unterlagerte Teilnetzwerke vorhanden, kann jedes der unterlagerten Teilnetzwerke über einen Koppelknoten mit dem wenigstens einen übergeordneten Teilnetzwerk verbunden sein.

Die Teilnetzwerk-weise Gruppierung der Stream-Teilnehmer hat sich als besonders geeignet erwiesen, um eine im Lichte der Position der Teilnehmer besonders effiziente Bildung von Streams zu erhalten.

Das übergeordnete Teilnetzwerk ist in vorteilhafter Ausgestaltung leistungsfähiger als die Gruppen-Teilnetzwerke.

Auch kann vorgesehen sein, dass über wenigstens eine einer Gruppe zugeordnete geschützte Verbindung zyklisch Datenpakete von dem Stream-Initiator an wenigstens zwei Stream-Teilnehmer der Gruppe gesendet werden, wobei der Stream-Initiator für verschiedene Stream-Teilnehmer der Gruppe bestimmte Datenpakete zeitlich versetzt sendet.

Alternativ oder zusätzlich kann vorgesehen, dass über wenigstens eine einer Gruppe zugeordnete geschützte Verbindung zyklisch Datenpakete von wenigstens zwei Stream-Teilnehmern der Gruppe an den Stream-Initiator gesendet werden, wobei das Senden der Datenpakete, um zeitliche Konflikte zu vermeiden, bevorzugt derart koordiniert erfolgt, dass diese zeitlich versetzt bei dem Stream-Initiator ankommen. Das koordinierte Senden der Datenpakete für ein Szenario mit mehreren Talkern als Stream-Teilnehmern, die über eine gemeinsame geschützte Verbindung, insbesondere einen gemeinsamen Stream an einen Listener als Stream-Initiator senden, erfolgt bevorzugt wie in der ebenfalls auf die Anmelderin zurückgehenden EP 3 432 097 A1 beschrieben. Insbesondere werden die Datenpakete zur Vermeidung von zeitlichen Konflikten von den Talkern jeweils in diesen zugeordneten senderseitigen Teilbereichen eines Zeitfensters gesendet.

Wenn über wenigstens eine einer Gruppe zugeordnete geschützte Verbindung zyklisch Datenpakete von dem Stream-Initiator an wenigstens zwei Stream-Teilnehmer der Gruppe gesendet werden, umfasst bevorzugt jedes Datenpaket einen Paket-Kenner, und die Stream-Teilnehmer verarbeiten jeweils nur Datenpakete, welche einen ihnen zugeordneten Stream-Kenner umfassen. Pakete mit anderen Kennern werden zweckmäßiger Weise verworfen. Bei den Paket-Kennern kann es sich beispielsweise um eine eindeutige ID der Endgeräte handeln, über welche die für diese vorgesehenen Pakete/Streamlets markiert werden und dann von den Endgeräten identifiziert werden können.

Es kann auch vorgesehen sein, dass für wenigstens zwei Gruppen wenigstens eine gemeinsame geschützte Verbindung eingerichtet wird, und über die wenigstens eine gemeinsame geschützte Verbindung Datenpakete an die Stream-Teilnehmer der wenigstens zwei Gruppen gesendet werden. Dann erfolgt bevorzugt an einem einen Koppel-Netzwerkknoten für die jeweilige Gruppe darstellenden Netzwerkknoten eine Filterung von Datenpaketen, wobei von dem jeweiligen Koppel-Netzwerkknoten nur Datenpakete an die Stream-Teilnehmer der jeweiligen Gruppe weitergeleitet werden, die für diese Gruppe bestimmt sind. Durch eine solche Filterung kann erreicht werden, dass mehr Bandbreite für Best-Effort-Verkehr insbesondere in einem Teilnetzwerk zur Verfügung steht. Denn es gilt zweckmäßiger Weise, dass für eine geschützte Verbindung/für einen Stream jeweils die volle Bandbreite reserviert wird, also auch die aufgrund der Filterung letztendlich nicht genutzte Bandbreite. Diese kann dann nicht von anderen Stream reserviert, aber von Best-Effort-Verkehr genutzt werden.

Insbesondere für den Fall, dass die Bandbreite einer geschützten Verbindung durch den Datenverkehr von oder zu mehreren Stream-Teilnehmern einer Gruppe noch nicht vollständig genutzt bzw. belegt ist, kann auch vorgesehen sein, dass eine geschützte Verbindung mehr als einer Gruppe zugeordnet ist und dann insbesondere Stream-Teilnehmer aus zwei oder mehr Gruppen über eine den Gruppen gemeinsamen geschützte Verbindung Datenpakete an den Stream-Initiator senden oder von diesem empfangen. Mit anderen Worten werden zwei oder mehr Gruppen von Stream-teilnehmern zu einer größeren Gruppe zusammengefasst, die eine gemeinsame geschützte Verbindung erhält, insbesondere alle der zusammengefassten Gruppen den gleichen Stream erhalten. Eine Verteilung der Daten auf die verschiedenen (Unter-)Gruppen kann dann durch geeignete Filterung insbesondere durch einen Koppel-Netzwerknoten der jeweiligen Gruppe erfolgen. Es können auch sämtliche Pakete des Streams in alle (Unter-)Gruppen weitergeleitet werden. Dann findet eine Selektion zweckmäßiger Weise durch die Endgeräte statt.

Die Filterung kann beispielsweise anhand eines Bits in der Streamlet-ID, die bevorzugt in dem Datenbereich (Payload) des jeweiligen Streamlet/Paketes enthalten ist, erfolgen. Ist beispielsweise das Bit 0x04 einer Streamlet-ID gesetzt, kann eine Filterung in einem Koppel-Knoten einer Gruppe und eine Weiterleitung durch einen Koppel-Knoten einer zweiten Gruppe, die sich eine geschützte Verbindung "teilen", erfolgen und umgekehrt, wenn dieses Bit nicht gesetzt ist.

Bei dem Stream-Initiator handelt es sich bevorzugt um eine Steuerung einer industriellen Anlage und/oder bei den in Gruppen aufgeteilten Stream-Teilnehmern jeweils um ein IO-Gerät oder einen Sensor oder einen Aktor oder ein einen Sensor und/oder Aktor umfassendes Gerät.

Über die den Gruppen zugeordneten geschützten Verbindungen können dann zyklisch Datenpakete gesendet werden, die mit Sensoren erfasste Messdaten und/oder für Aktoren bestimmte Steuerdaten insbesondere als Nutzdateninhalt umfassen. Werden Steuerdaten zyklisch an Aktoren übermittelt, wird bevorzugt von diesen zyklisch auf einen industriellen technischen Prozess eingewirkt.

Jedem Gruppen-Teilnetzwerk kann ferner ein Gruppen-Kenner, insbesondere Gruppen-Name oder Gruppen-Namensbestandteil zugeordnet sein.

Als besonders zweckmäßig hat es sich weiterhin erwiesen, wenn in jedem Gruppen-Teilnetzwerk ein Stream-Teilnehmer oder Netzwerknoten als Gruppen-Koordinator dient, und von dem Gruppen-Koordinator eine Liste mit Kennern, insbesondere Namen der Stream-Teilnehmer in dem Teilnetzwerk erstellt und diese bevorzugt einem übergeordneten Koordinator übermittelt wird. Der übergeordnete Koordinator kann an bzw. in einem übergeordneten Teilnetzwerk liegen. Dadurch, dass für jedes Teilnetzwerk ein Koordinator ausgewählt wird und dieser einem überlagerten Koordinator eine Liste mit den Gerätenamen aus seinem Teilnetz, für die er die Koordination übernimmt, übermittelt, entsteht im Netzwerk an jeder Position eine hierarchische Liste mit den Gerätenamen anhand derer einen Zuordnung zu den Teilnetzwerken auf besonders geeignete Weise möglich ist. Ein (jeweiliger) Gruppen-Koordinator kann insbesondere in Form eines Koppel-Netzwerkknotens gegeben sein, der bevorzugt das jeweilige Teilnetzwerk mit einem überlagerten Teilnetzwerk verbindet.

Besonders vorteilhaft ist es, wenn die Topologie-Informationen eine Liste mit Stream-Teilnehmern, die von dem Stream-Initiator Datenpakete über die wenigstens eine geschützte Verbindung erhalten oder diesem Datenpakete über die wenigstens eine geschützte Verbindung senden wollen, umfassen oder durch eine solche gegeben sind. Dann umfasst die Liste bevorzugt Namen der Stream-Teilnehmer und die Namen oder Bestandteile dieser sind bevorzugt derart, dass von diesen die Position des jeweiligen Stream-Teilnehmers im Netzwerk, insbesondere bis auf ein unterlagertes Teilnetzwerk genau ableitbar ist. Beispielsweise kann in einem hierarchisch strukturierten Netzwerk mit einem überlagerten Teilnetzwerk, dem eines oder mehrere unterlagerte Teilnetzwerke unterlagert sind, eine die hierarchische Netzwerkstruktur widerspiegelnde Namensstruktur gewählt werden. Etwa kann ein Gerätename Kenner, insbesondere Namen sämtlicher Teilnetzwerke, unterhalb derer dasjenige (unterste) Teilnetzwerk liegt, in dem sich das Gerät befindet, sowie einen Kenner dieses untersten Teilnetzwerkes sowie einen dem Gerät zugeordneten, in dem untersten Teilnetzwerk eindeutigen Kenner umfassen. Rein beispielhaft sei genannt, dass ein überlagertes Teilnetz, etwa ein überlagertes Backbone-Netz den Kenner bzw. Namen "A" trägt, das unterlagerte Teilnetz, in dem das Gerät liegt, den Kenner bzw. Namen "II" und dem Gerät selber der Kenner bzw. Name "5". Dann ergibt sich als hierarchischer Gerätename A.II.5.

Ist vorgesehen, dass die Topologie-Informationen eine Liste mit Gerätenamen umfasst, von denen auf die Geräte-Position geschlossen werden kann, werden die Stream-Teilnehmer bevorzugt anhand ihrer Namen oder anhand von Bestandteilen ihrer Namen in Gruppen unterteilt. Rein beispielhaft sei genannt, dass sich sechs Stream-Teilnehmer an einem von dem Stream-Initiator angekündigten Stream anmelden, wobei die sechs Stream-Teilnehmer in drei verschiedenen, an verschiedenen Stellen an dem überlagerten Backbone-Netzwerk angeschlossenen Teilnetzwerken angeschlossen sind, konkret an den Teilnetzwerken "I", "II" und "III" und die Namen A.I.1, A.I.2, A.II.1, A.II.2, A.III.1 und A.III.2 aufweisen. Dann würden A.I.1 und A.I.2 sowie A.II.1 und A.II.2 sowie A.III.1 und A.III.2 jeweils einer gruppe zugeordnet und bevorzugt für jede der drei Gruppen eine eigene geschützte Verbindung eingerichtet. Sofern insbesondere aufgrund der Bandbreitenausnutzung der Datenverkehr von oder zu den Stream-Teilnehmern aus zwei Gruppen, denen etwa die Teilnetzwerke II und III zugeordnet sind, zusammengefasst werden kann, kann für diese beiden Gruppen auch nur eine geschützte Verbindung eingerichtet werden, so dass für die insgesamt drei Gruppen insgesamt zwei geschützte Verbindungen vorliegen.

Bevorzugt werden die Topologie-Informationen dem Stream-Initiator und/oder einer zentralen Stelle bzw. Vorrichtung, welche die Einrichtung geschützter Verbindungen in dem Netzwerk abwickelt, bereitgestellt, und der Stream-Initiator und/oder die zentralen Stelle bzw. Vorrichtung teilen die Stream-Teilnehmer in Gruppen auf und richten mehrere geschützte Verbindungen für die Gruppen ein.

Die bereitgestellten Topologie-Informationen können vorteilhaft unter Verwendung eines Topologie-Erkennungsprotokolls und/oder eines Adressvergabe-Protokolls ermittelt werden. Insbesondere durch den Einsatz von derartigen Protokollen, die bis auf eine geeignete Anpassung denjenigen entsprechen, die aus dem Stand der Technik bereits vorbekannt sind, können die Positionen der einzelnen Endgeräte einer Anwendung ermittelt werden. Die Anpassung kann beispielsweise durch die Kennzeichnung von Netzwerkknoten als sogenannte Koppel-Netzwerkknoten und der Verteilung einer ID der Geräte mit dieser Eigenschaft erfolgen bzw. gegeben sein. Dazu kann beispielsweise ein Name an jedem Übergang, insbesondere Koppel-Netzwerkknoten zur Verbindung von Teilnetzwerken, und/oder in jedem Teilnetzwerk konfiguriert sein, der dann in einem solchen Protokoll verwendet wird, insbesondere, um eine hierarchische Liste aller Geräte mit der jeweiligen Position im Teilnetzwerk zu erzeugen. Zu Adressvergabe-Protokollen sei auch auf IPv6-Adressen mit Präfix verwiesen. Konfigurierte IDs von Koppel-Netzwerkknoten entsprechen dann bevorzugt konzeptionell einem Präfix für die hierarchische Namensbildung der Netzwerkknoten und Endgeräte in den Teilnetzwerken hinter den Koppel-Netzwerkknoten.

Die Erfindung betrifft darüber hinaus ein Gerät zur Durchführung des erfindungsgemäßen Verfahrens.

Das Gerät ist zur Durchführung des Verfahrens ausgebildet und/oder eingerichtet. Ein erfindungsgemäßes Gerät kann insbesondere dazu ausgebildet und/oder eingerichtet sein, Topologie-Informationen, welche die Positionen der Stream-Teilnehmer im Netzwerk angeben oder von denen diese ableitbar sind, zu erhalten, und die Stream-Teilnehmer in Abhängigkeit ihrer jeweiligen Position im Netzwerk in zwei oder mehr Gruppen mit jeweils zwei oder mehr Stream-Teilnehmern aufzuteilen, und mehrere geschützte Verbindungen einzurichten, wobei jeder Gruppe wenigstens eine geschützte Verbindung zugeordnet wird, über die die Stream-Teilnehmer der jeweilige Gruppe Datenpakete an den Stream-Initiator senden oder Datenpakete von dem Stream-Initiator empfangen können oder empfangen. Dies hat sich u.a. als besonders geeignet erwiesen, wenn es sich bei dem erfindungsgemäßen Gerät um ein solches handelt, das im Netzwerk die Rolle eines Stream-Initiators übernimmt, also Datenpakete über die geschützten Verbindungen sendet oder empfängt. Es kann sich beispielsweise eine Steuerung, insbesondere eine speicherprogrammierbare Steuerung handeln.

Das erfindungsgemäße Gerät insbesondere dieser Ausgestaltung kann auch ein Industrie-PC oder ein Netzwerkknoten, etwa eine Bridge oder ein Switch sein, der dann entsprechend ausgebildet und/oder eingerichtet ist.

Auch kann ein erfindungsgemäßes Gerät dazu ausgebildet und/eingerichtet sein, mitgeteilt zu bekommen, welcher Gruppe es angehört und/oder welche wenigstens eine geschützte Verbindung seiner Gruppe zugeordnet ist oder wird, und um sich an wenigstens einer seiner Gruppe zugeordneten geschützten Verbindung anmelden.

Alternativ oder zusätzlich kann ein erfindungsgemäßes Gerät dazu ausgebildet und/eingerichtet sein, aus denjenigen Datenpaketen, die über eine seiner Gruppe zugeordnete geschützte Verbindung an diesem ankommen, diejenigen Datenpakete, die für das Gerät bestimmt sind, weiterzuverarbeiten und andere Datenpakete herauszufiltern/zu verwerfen. Die für das Gerät bestimmten Datenpakete der geschützten Verbindung bzw. des Streams können insbesondere über einen in diesen enthaltenen Kenner erfolgen, wofür das Gerät entsprechend ausgebildet und/oder eingerichtet sein kann.

Diese Ausführungsformen sind insbesondere von Vorteil, wenn es sich bei dem erfindungsgemäßen Gerät und ein Endgerät handelt, das einen Stream-Teilnehmer darstellt bzw. darstellen soll. Rein beispielhaft sei ein Endgerät genannt, welches wenigstens einen Sensor und/oder Aktor insbesondere für eine industrielle Anlage umfasst.

Weiterhin kann ein erfindungsgemäßes Gerät dazu ausgebildet und/oder eingerichtet sein, in Abhängigkeit wenigstens eines in dem Datenbereich (der Payload) von bei ihm ankommenden Datenpaketen eine Entscheidung zu treffen, ob die Datenpakete an die Stream-Teilnehmer einer Gruppe weitergeleitet werden oder nicht. Dies ist vor allem dann vorteilhaft, wenn ein erfindungsgemäßes Gerät als Koppel-Netzwerkknoten ausgebildet ist bzw. die Rolle eines Koppel-Netzwerkknotens übernimmt. Bei dem Kenner kann es sich insbesondere um eine Streamlet-ID handeln. Die Entscheidung, ob weitergeleitet wird oder nicht, kann dann beispielsweise anhand eines in der Streamlet-ID gesetzten oder nicht gesetzten Bits erfolgen, wofür das erfindungsgemäße Gerät entsprechend ausgebildet und/oder eingerichtet sein kann.

Ein weiterer Gegenstand der Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin zeigt jeweils in rein schematischer Darstellung
- FIG 1: ein industrielles Netzwerk, in dem ein Talker an mehrere Listener über jeweils einen Stream Daten sendet;
- FIG 2: das Netzwerk aus FIG 1, wobei der Talker an die mehreren Listener Daten über einen Stream sendet;
- FIG 3: ein Datenpaket und ein Streamlet;
- FIG 4: den Talker und drei der Listener aus FIG 2 und das zeitversetzte Senden von Datenpaketen an diese;
- FIG 5: ein industrielles Netzwerk mit einem übergeordneten Backbone-Teilnetz und vier untergeordneten Subnetzen gemäß denen die Listenern in vier Gruppen unterteilt sind;
- FIG 6: das Netzwerk aus FIG 5, wobei drei Streams für die vier Gruppen eingerichtet sind;
- FIG 7: einige der Schritte eines Ausführungsbeispiels des erfindungsgemäßen Verfahrens; und
- FIG 8: eine Teildarstellung des Netzwerkes aus den Figuren 5 und 6, wobei einer der Listener die Position wechselt.

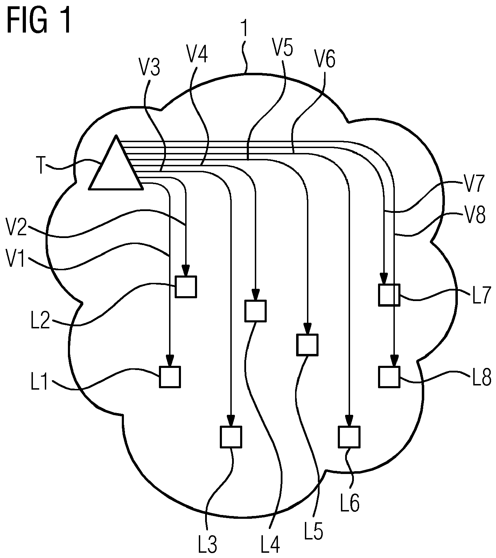

Die FIG 1 zeigt eine rein schematische Teildarstellung eines industriellen Kommunikationsnetzwerkes 1, welcher der Datenkommunikation der Komponenten einer industriellen, technischen Anlage dient. Von der Anlage sind in der FIG 1 nur insgesamt neun Endgeräte T, L1-L8 gezeigt. Bei einem dieser Endgeräte T handelt es sich vorliegen um eine Steuerung der Anlage, welche zyklisch Steuerdaten an die weiteren Endgeräte L1-L8 zu übersenden hat, die jeweils einen Aktor umfassen bzw. durch einen solchen gebildet werden. Die Aktoren wirken, wenn sie die Steuerdaten zyklisch empfangen, in an sich bekannter Weise zyklisch auf die Anlage bzw. einen in dieser ablaufenden Prozess ein. Die Datenübertragung zwischen der Steuerung T und den Aktoren bzw. den diese umfassenden Geräten L1-L12 ist entsprechend im Rahmen einer bzw. für eine Anwendung, welche der Steuerung der Anlage dient, erforderlich.

Die Steuerung T, die einen Sender von Daten darstellt, ist ein Talker und die Aktoren bzw. diese umfassenden Endgeräte L1-L8, die Empfänger der Daten darstellen, sind Listener.

Um eine gesicherte Übertragung der Steuerdaten in Echtzeit, insbesondere mit garantierter Latenz zu ermöglichen, wie es für einen reibungsfreien Betrieb der Anlage wesentlich ist, soll die zyklische Datenübertragung über geschützte Verbindungen, vorliegend als TSN-Streams erfolgen.

Aus dem Stand der Technik ist bekannt, dass hierzu zwischen dem Stream-Initiator T und jedem der jeweils einen Stream-Teilnehmer darstellenden Geräte L1-L8 jeweils eine geschützte Verbindung, konkret ein eigener TSN-Stream V1-V8 eingerichtet wird, wobei in diesem Zusammenhang auf die zugehörigen Standards, insbesondere IEEE 802.1 verwiesen sei. Dabei wird der jeweilige Stream V1-V8 zunächst von der den Stream-Initiator darstellenden Steuerung T angekündigt, wofür diese ein Ankündigungsnachricht, konkret einen Talker Advertise mit einer Streambeschreibung für den jeweiligen Stream V1-V8 herausgibt, die im Netzwerk verteilt wird. Die Stream-Teilnehmer darstellenden Listener L1-L8 melden sich dann jeweils an einem Stream V1-V8 an, indem sie Teilnahmenachrichten in Form von Listener Joins für den jeweiligen Stream senden, die an den Talker T1 zurück übertragen werden. An den beteiligten Netzwerkknoten, die in der FIG 1, in welcher das Netzwerk 1 schematisch durch eine Wolke angedeutet ist, nicht separat zu erkennen sind, werden für jeden Stream V1-V8 die verfügbaren Ressourcen, u.a. die verfügbare Bandbreite geprüft und reserviert, sofern sie verfügbar sind. Nach erfolgreicher Reservierung kann die Weiterleitung für jeden Stream V1-V8 aktiviert werden und es werden zyklisch Stream-Datenpakete über die Streams V1-V8 an die Stream-Teilnehmer L1-L8 gesendet. Dann liegen insgesamt acht geschützte 1:1-Verbindungen vor, und in den beteiligten Netzwerkknoten sind für jeden Stream V1-V8 eigene Kontrollinformationen zu speichern. Da die maximale Anzahl von Streams in der Regel begrenzt ist, liegt insbesondere bei einer großen Anzahl von Geräten ein Skalierungsproblem vor.

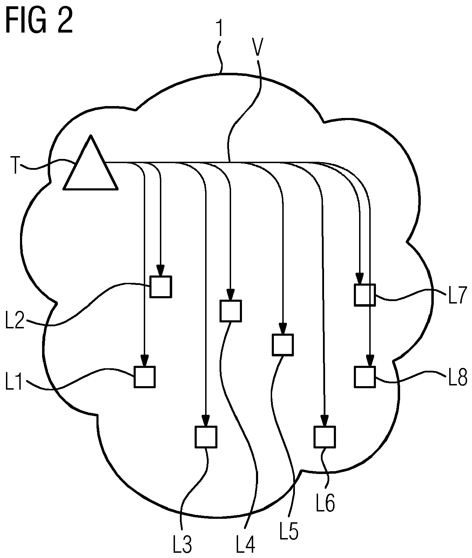

In der ebenfalls auf die Anmelderin zurückgehenden EP 3 432 097 A1 ist ein Mechanismus für eine effektive Abbildung von den Daten, die von einem Sender T1 an mehrere Empfänger L1-L8 sowie von mehreren Sendern an einen Empfänger zu übertagen sind, auf jeweils eine geschützte Verbindung, insbesondere jeweils einen Stream S beschrieben. Dies ist rein schematisch in FIG 2 angedeutet, welche das Netzwerk 1 aus FIG 1 zeigt, wobei ein gemeinsamer Stream S für alle acht Listener L1-L8 eingerichtet ist und über diesen einen Stream S Datenpakete von der Steuerung T an die Listener L1-L8 übertragen wird.

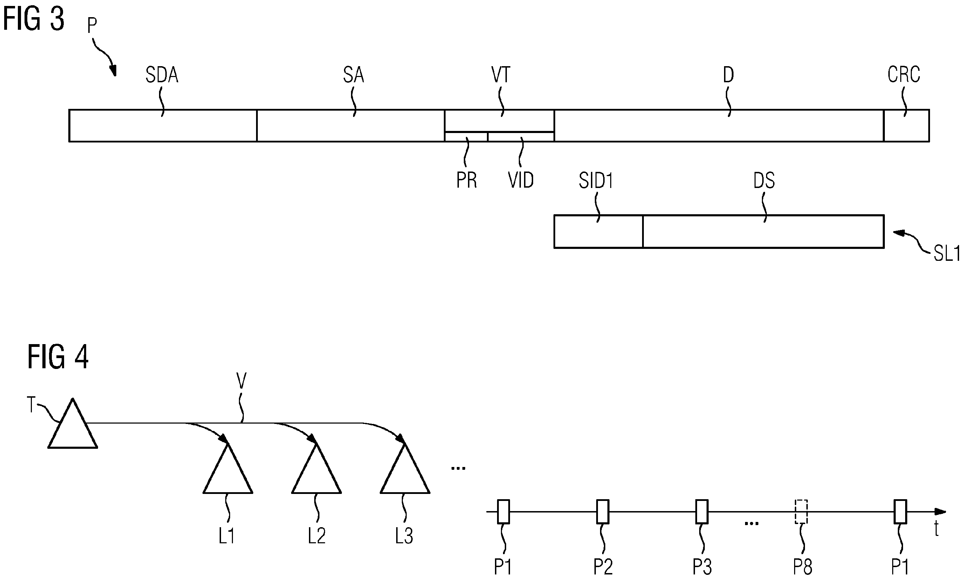

Bei der Datenübertragung wird ein Multiplexing durchgeführt, wobei jeweils Datenpakete für die verschiedenen Empfänger L1-L8 (bzw. für ein Multiple-Talker-Szenario von verschiedenen Sendern) über die gleiche geschützte Verbindung, konkret im gleichen Stream S übertragen werden. Die von verschiedenen Stream-Teilnehmern L1-L8 stammenden bzw. die für verschiedene Stream-Teilnehmer L1-L8 bestimmten, in einem Stream übertragenen Datenpakete/-frames eines Streams können dann auch als Streamlets betrachtet und bezeichnet werden. Zur Identifikation des eigentlichen Empfängers L1-L8 (oder Senders) kann zusätzlich eine ID in den Datenpaketen enthalten sein. Dies kann z.B. bei PROFINET die Frame-ID sein. Bei Feldbussystemen existieren für die einzelnen Empfänger/Sender ohnehin meist eindeutige IDs, die dann als ID im Streamlet verwendet werden können. Dies ist schematisch in FIG 3 gezeigt, in welcher ein beispielhaftes Stream-Datenpaket P für den Listener L1 gezeigt ist, dass eine Stream Destination Address SDA, eine Source Address SA, ein VLAN Tag VT mit einer Prio PR und einer VLAN ID VID, Daten D (im Englischen auch als "Payload" bezeichnet) sowie eine Prüfziffernfolge CRC umfasst. Darunter ist ein Streamlet SL1 -wiederum beispielhaft für den Listener L1 - gezeigt, welches dem Datenbereich D des Paketes P1 wie oben dargestellt entspricht. Wie man erkennt, ist an dessen Anfang eine Streamlet-ID SID vorhanden, gefolgt vom verbleidenden Streamlet-Nutzdatenbereich DS.

Von dem Talker werden zeitversetzt Datenpakete P1-P8 für die Listener L1-L8 gesendet, wie in der FIG 4 rechts schematisch dargestellt. In FIG 4 links ist nochmal angedeutet, dass der Talker an mehrere Listener L1-L8 über einen Stream V Pakete P1-P8 sendet. Über die verschiedenen Streamlet-IDs SID1-SID8 können die Listener L1-L8 für sie bestimmte Pakete P1-P8 identifizieren und dann nur diese verarbeiten und die Pakete P1-P8 für die jeweils anderen Listener L1-L8 verwerfen.

Durch die Sammlung von vielen Daten P1-P8 in einem Stream S erfolgt eine deutlich effizientere Netzwerkauslastung im Vergleich zur Verwendung von einem Stream V1-V8 pro Gerät L1-L8 mit jeweils eigener Weiterleitung und Ressourcenreservierung aber nicht ausgenutzter Bandbreite, wie es in FIG 1 schematisch dargestellt ist.

Es hat sich gezeigt, dass insbesondere im industriellen Umfeld die beteiligten Endgeräte T, L1-L8 räumlich verteilt und an verschiedenen Stellen im Netzwerk 1 angeschlossen sein können. Oftmals liegt auch eine hierarchische Struktur mit einem übergeordneten Teilnetzwerk und mehreren Subnetzen, in denen dann insbesondere die Sensoren und/oder Aktoren liegen, vor. Beispielsweise kann ein Backbone-(Teil-)Netz vorliegen, mit dem mehrere Subnetze verbunden sind, in denen jeweils mehrere Aktoren und/oder Sensoren liegen.

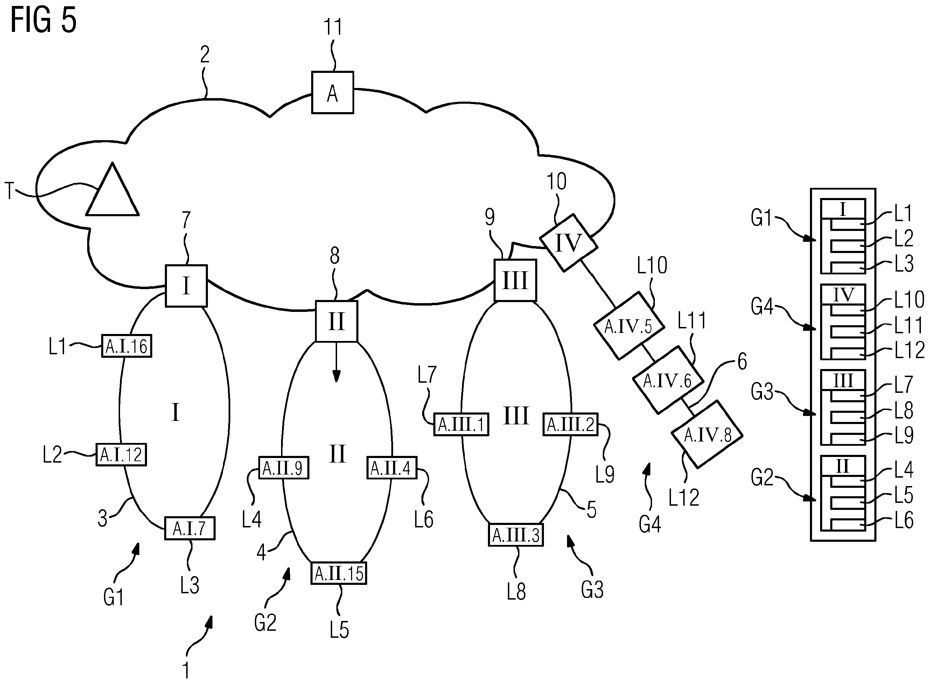

Dies ist in der FIG 5 - wiederum rein schematisch - dargestellt. Das Netzwerk 1 umfasst ein TSN-Backbone-Teilnetz 2 und vier diesem unterlagerte Subnetze 3-6. In jedem der vier Subnetze 3-6 liegen vorliegend drei Endgeräte, die - in Analogie zu der FIG 1 - durch Aktoren gegeben sind bzw. einen solchen umfassen. Auch bei dem Szenario in FIG 5 stellen die zwölf Endgeräte L1-L12 in den Subnetzen 3-6 Listener dar, die zyklisch Daten von der hier in dem TSN-Backbone-Netzwerk liegenden Steuerung T benötigen, die geschützt übertragen werden sollen.

Durch das im Folgenden beschriebene Ausführungsbeispiel des erfindungsgemäßen Verfahrens kann die Datenkommunikation in diesem Szenario besonders effizient gestaltet werden.

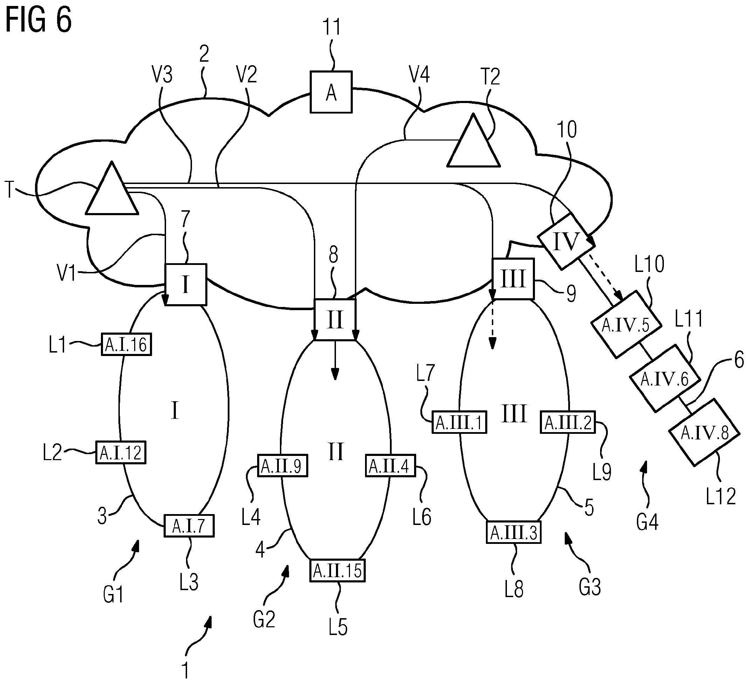

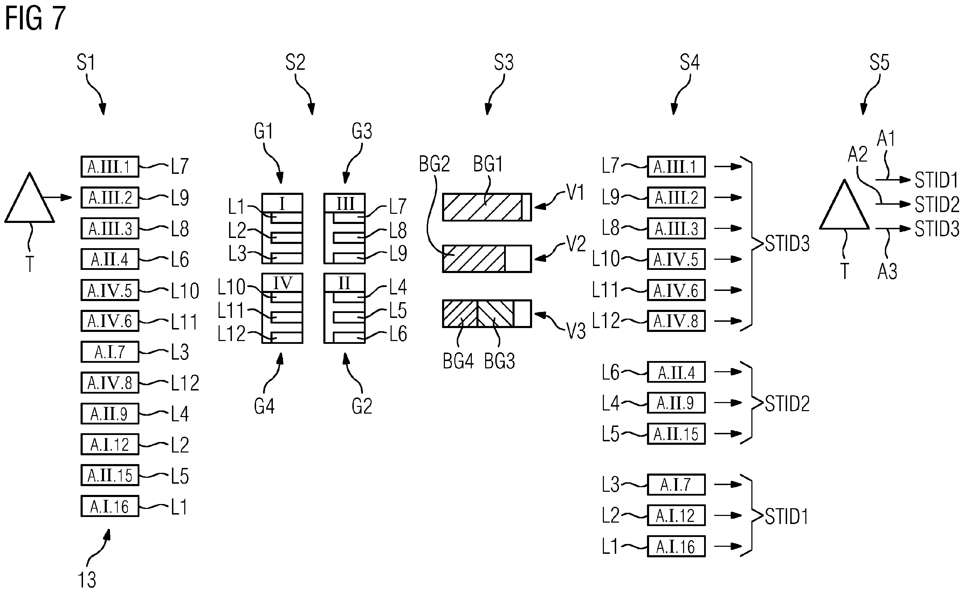

Dazu ist vorgesehen, dass Topologie-Informationen bereitgestellt werden, welche die Positionen der die Stream-Teilnehmer bildenden Endgeräte L1-L12 im Netzwerk 1 angeben oder von denen diese ableitbar sind (Schritt S1, siehe FIG 7), und die Stream-Teilnehmer L1-L12 in Abhängigkeit ihrer jeweiligen Position im Netzwerk 1 in zwei oder mehr jeweils an unterschiedlichen Stellen im Netzwerk 1 angeschlossenen Gruppen G1-G4 mit jeweils zwei oder mehr Stream-Teilnehmern L1-L12 aufgeteilt werden (Schritt S2), und mehrere geschützte Verbindungen V1-V3 eingerichtet werden (Schritte S3 bis S5), wobei jeder Gruppe G1-G4 wenigstens eine geschützte Verbindung V1-V3 zugeordnet wird (Schritt S3), über die die Stream-Teilnehmer L1-L12 der jeweilige Gruppe G1-G4 Datenpakete von dem Stream-Initiator T empfangen können und im Anschluss an die erfolgreiche Einrichtung der geschützten Verbindungen V1-V3 empfangen. Die FIG 6 zeigt das Netzwerk 1 aus FIG 5, wobei die drei geschützten Verbindungen V1-V3 in Analogie zu den Figuren 1, 2 und 4 durch Pfeile angedeutet sind.

Die Schritte S1-S5 werden von der Anwendung abgewickelt, welche der Steuerung dient.

Wie man erkennt, ist jede der vier Gruppen G1-G4 über einen Koppel-Netzwerkknoten 7-10 an einer anderen Stelle mit dem Backbone-Teilnetz 2 verbunden. In den Figuren 5 und 6 ist noch ein weiterer Netzwerkknoten 11 gezeigt, konkret beispielshaft ein Knoten des Backbone-Teilnetzes 2.

Im Rahmen des hier beschriebenen Ausführungsbeispiels wird eine die Topologie-Informationen bildende Liste 13 bereitgestellt, die der FIG 7 entnommen werden kann.

Die Liste 13 ist unter Verwendung eines Topologie-Erkennungsprotokolls und/oder eines Adressvergabe-Protokolls ermittelt worden. In der FIG 7 ist eine hierarchische Namensbildung für Endgeräte durch Präfixvergabe vergleichbar mit IPv6 dargestellt. Die Präfixvergabe erfolgt dabei von dem jeweiligen Netzwerkknoten 7-11, der den Zugang zum höheren Teilnetzwerk herstellt (entspricht der Funktion eines IP-Routers bei Ipv6) durch Zuweisung der jeweiligen Kennung (A bzw. I bis IV entspricht dem Präfix). Dadurch ergeben sich je nach Lage der Geräte L1-L12 andere Präfixe, die in der vollständigen Bezeichnung enthalten sind.

Alternativ dazu könnten hierarchischen Namen (oft als Ortskennzeichen bezeichnet) der Geräte verwendete werden, welche vom Netzwerkadministrator bei der Inbetriebnahme abhängig von der Position des jeweiligen Gerätes L1-L12 manuell vergeben werden.

Die Liste 13 stellt eine hierarchische Liste mit den Endgerätepositionen aus Sicht des Talkers T dar. Die Liste 13 umfasst für jeden Stream-Teilnehmern L1-L12 einen hierarchischen Namen, der die Position des jeweiligen Stream-Teilnehmers L1-L12 in dem Netzwerk 1 bis auf das jeweilige unterlagerte Subnetz 3-6, in dem der jeweilige Teilnehmer L1-L12 liegt, ableitbar ist bzw. diesen angibt.

Konkret umfasst jeder Name einen dem überlagerten Backbone-Netz 2 zugeordneten hierarchischen Namensbestandteil, vorliegend "A" und einen dem jeweiligen unterlagerten Subnetz 3-6 zugeordneten hierarchischen Namensbestandteil, vorliegend eine römische Zahl "I"-"IV" für die Subnetze 3-6, und einen dem jeweiligem Teilnehmer L1-L12 zugeordneten Namensbestandteil, vorliegend eine arabische Zahl zwischen "1" und ""16". Es sei angemerkt, dass, auch wenn der letzte Bestandteil des hierarchischen Namens der Stream-Teilnehmer L1-L12 vorliegend über das gesamte Netz 1 eindeutig ist, konkret keine arabische Ziffer doppelt vergeben ist, es an sich auch ausreichen würde, wenn dieser für die jeweilige Anwendung für die Geräte L1-L12 in dem Subnetz 3-6 eindeutig ist. Die Zuordnung der Endgeräte L1-L12 zu den jeweiligen Anwendungen muss jedoch weiterhin möglich sein. Es versteht sich, dass für den Fall, dass es mehr als ein überlagertes Backbone-Netz geben würde, weitere Buchstaben, etwa "B", "C" etc. Vergeben werden könnten und, wenn es weitere Subnetze geben würde, die sich in der gleichen hierarchischen Ebene befinden, wie die Subnetze 3-6, weiter römische Zahlen verwendet werden könnten. Sollte ein Netz eine Struktur aufweisen, die tiefer ist als die dargestellten zwei Ebenen mit überlagertem Backbone-Netz 2 und unterlagerten Subnetzen 3-6, etwa weiteren, den Subnetzen 3-6 jeweils unterlagerte Subnetze existieren, würde für diese ein weiterer hierarchischer Namensbestandteil eingefügt. Zusätzlich sei angemerkt, dass die Kenner der jeweiligen Subnetze 3-6 auch von der gleichen Art sein können, da sich die Hierarchie durch eine Aneinanderkettung der jeweiligen Kenner ergibt. Dabei muss dann jedes Gerät auf der gleichen hierarchischen Ebene eine jeweils eindeutige Kennung aufweisen.

Die sich für die vorliegende Netzwerk-Struktur ergebenden Gerätenamen für die Stream-Teilnehmer L1-L12 sind in den Figuren 5 und 6 jeweils an diesen angegeben.

Wie man sieht, kann von jedem Namen direkt abgeleitet werden, in welchem Subnetz 3-6 sich das jeweilige Gerät befindet. Dies macht es auf besonders einfache Weise möglich, die Stream-Teilnehmer L1-L12 nach Subnetzen zu gruppieren, was im nächsten Schritt erfolgt.

Besonders vorteilhaft ist es, wenn die Topologie-Informationen eine Liste mit Stream-Teilnehmern, die von dem Stream-Initiator Datenpakete über die wenigstens eine geschützte Verbindung erhalten oder diesem Datenpakete über die wenigstens eine geschützte Verbindung senden wollen, umfassen oder durch eine solche gegeben sind. Dann kann die Liste insbesondere Namen der Stream-Teilnehmer umfassen und die Namen oder Bestandteile dieser sind bevorzugt derart, dass von diesen die Position des jeweiligen Stream-Teilnehmers im Netzwerk, insbesondere bis auf ein unterlagertes Teilnetzwerk genau ableitbar ist. Beispielsweise kann in einem hierarchisch strukturierten Netzwerk mit einem überlagerten Teilnetzwerk, dem eines oder mehrere unterlagerte Teilnetzwerke unterlagert sind, eine die hierarchische Netzwerkstruktur widerspiegelnde Namensstruktur gewählt werden. Etwa kann ein Gerätename Kenner, insbesondere Namen sämtlicher Teilnetzwerke, unterhalb derer dasjenige (unterste) Teilnetzwerk liegt, in dem sich das Gerät befindet, sowie einen Kenner dieses untersten Teilnetzwerkes sowie einen dem Gerät zugeordneten, in dem untersten Teilnetzwerk eindeutigen Kenner umfassen. Rein beispielhaft sei genannt, dass ein überlagertes Teilnetz, etwa ein überlagertes Backbone-Netz den Kenner bzw. Namen "A" trägt, das unterlagerte Teilnetz, in dem das Gerät liegt, den Kenner bzw. Namen "II" und dem Gerät selber der Kenner bzw. Name "5". Dann ergibt sich als hierarchischer Gerätename A.II.5.

Die Gruppierung der Stream-Teilnehmer L1-L12 erfolgt vorliegend nach den vier Subnetzen 3-6, konkret werden diejenigen Stream-Teilnehmer L1-L12, die jeweils in einem Subnetz 3-6 liegen, zu einer Gruppe G1-G4 zusammengefasst bzw. gruppiert. Vorliegend ergeben sich, da vier unterlagerte Subnetze 3-6 vorhanden sind, somit vier Gruppen G1-G4, was in FIG 7 zu Schritt S2 angedeutet ist. Die Gruppen sind auch in der FIG 5 rechts dargestellt.

Im Anschluss werden mehrere geschützte Verbindungen, vorliegenden TSN-Streams V1-V3 für die erhaltenen Gruppen G1-G4 eingerichtet.

Dabei werden einzelne Streams bzw. geschützte Verbindungen V1-V3 mit den Gruppen G1-G4 für die Teilnetzwerke 3-6 aufgefüllt (siehe FIG 7 unter Schritt S3). Dabei kann für jede für eine gegebene Netzwerkstruktur erhaltene Gruppe G1-G4 eine (oder mehrere) eigene geschützte Verbindung(en) V1-V3 eingerichtet werden kann (können), dies ist jedoch nicht zwingend erforderlich.

Bei der Aufnahme eines weiteren Gerätes durch die Anwendung kann diese entscheiden, ob es in die bestehende Gruppe G1-G4 und den dafür aufgebauten Stream V1-V3 aufgenommen werden kann (bei genügend Bandbreite) oder ob ein zusätzlich Stream verwendet werden muss, bzw., ob der aktuelle verwendete Stream abgebaut und ein neuer Stream mit einer größeren Datenmenge aufgebaut werden soll. Diese Entscheidung kann dabei bevorzugt abhängig von dem jeweiligen hierarchischen Namen des Gerätes und damit der Position im Netzwerk 1 erfolgen.

Sofern insbesondere aufgrund der Bandbreitenausnutzung der Datenverkehr von oder zu den Stream-Teilnehmern L1-L12 aus zwei (oder mehr) Gruppen G1-G4, in eine geschützte Verbindung V1-V3 zusammengefasst werden kann, kann auch für zwei (oder mehr) Gruppen G1-G4 nur eine gemeinsame geschützte Verbindung eingerichtet werden, die sich die beiden Gruppen dann praktisch "teilen", so dass für beispielsweise vier Gruppen insgesamt drei geschützte Verbindungen eingerichtet werden. Dies ist vorliegend für die Gruppen G3 und G4 der Fall, so dass insgesamt drei geschützte Verbindungen V1-V3 eingerichtet werden. In FIG 7 unter Schritt S3 ist die von der Anwendung vorgenommene Aufteilung der jeweiligen Gruppen G1-G4 zu den geschützten Verbindungen V1-V3 dargestellt.

Die Bandbreite BG1-BG4, welche die Stream-Teilnehmer L1-L12 der jeweiligen Gruppe G1-G4 zusammen benötigen, ist in der FIG 7 unter Schritt S3 jeweils durch einen schraffierte Balken innerhalb eines die gesamte Bandbreite der drei geschützten Verbindungen V1-V3 repäsentierenden Balkens dargestellt. Wie man sieht, wird die verfügbare Bandbreite bei den Verbindungen V1 und V2 durch die jeweilige Gruppe G1, G2 gut ausgenutzt. Die Bandbreite BG4, BG3, die für die Gruppen G3 und G4 erforderlich ist, beträgt jedoch jeweils weniger als die Hälfte der Bandbreite des Streams V3, so dass diesen beiden Gruppen G3, G4 ein gemeinsamer Stream V3 zugeordnet werden kann und vorliegend wird.

Im Anschluss daran werden in Schritt S4 die den drei geschützten Verbindungen V1-V3 zugeordneten Stream IDs STID1-STID3 jeweils den Stream-Teilnehmern L1-L12 bekannt gegeben, die in den zugehörigen Gruppen G1-G4, also Teilnetzen 3-6 liegen (Schritt S4).

Dann kann der Talker T die drei Streams V1-V3 mit der jeweiligen Stream-ID STID1-STID3 im Netzwerk ankündigen, indem er für jeden der drei Streams V1-V3 eine die jeweilige Stream-ID STID1-STID3 und eine Streambeschreibung umfassende Ankündigungsnachricht A1-A3 sendet (Schritt S5).

Im Anschluss daran können sich die Stream-Teilnehmer L1-L12, die wissen, welcher Stream V1-3 ihrer Gruppe G1-G4 zugeordnet ist, konkret die Stream-ID STID1-STID3 des ihrer Gruppe G1-G4 zugeordneten Streams V1-V3 kennen, da ihnen diese zuvor mitgeteilt wurde, an dem jeweiligen Stream V1-V3 anmelden. Die jeweilige Zuordnung wird dabei von der Anwendung den jeweiligen Geräten L1-L12 mitgeteilt. Die zu verwendenden Stream-Adressen (Stream-DAs) können entweder auch verteilt oder durch ein Protokoll ermittelt bzw. auch lokal gebildet werden.

Nach erfolgreicher Reservierung von Ressourcen an den beteiligten Netzwerkknoten 7-10, von denen in den Figuren 5 und 6 nur einige beispielhaft gezeigt sind, und Aktivierung der Weiterleitung können Datenpakete P von dem Talker T an die Listener L1-L12 gesendet werden. Es sei angemerkt, dass vorliegend in an sich bekannter Weise ein Reservierungsprotokoll für die Abwicklung der Reservierung zum Einsatz kommt, konkret SRP.

Über die gemeinsame geschützte Verbindung V3 werden Datenpakete P an die Stream-Teilnehmer L7-L12 der Gruppen G3 und G4 gesendet, wobei an den Koppel-Netzwerkknoten 9 und 10 eine Filterung von Datenpaketen P erfolgt. Konkret werden von dem jeweiligen Koppel-Netzwerkknoten 9, 10 nur Datenpakete P an die Stream-Teilnehmer L7-L12 der jeweiligen Gruppe G3, G4 weitergeleitet, die für diese Gruppe G3, G4 bestimmt sind. Die Filterung erfolgt vorliegend anhand eines Bits in der Streamlet-ID SID3. Ist beispielsweise das Bit 0x04 gesetzt, erfolgt eine Filterung im Knoten 9 und eine Weiterleitung durch Knoten 10 und umgekehrt, wenn dieses Bit nicht gesetzt ist. In der FIG 6 deuten Pfeile mit gestrichelter Linie die Filterung an dem jeweiligen Koppel-Netzwerkknoten 9, 10 an. Alternativ dazu, dass eine Filterung durch die Koppel-Knoten 9, 10 erfolgt, können auch sämtliche Pakete P des gemeinsamen Streams V3 an bzw. in beide Gruppen G3, G4 weitergeleitet werden. In beiden Fällen findet zweckmäßiger Weise die Selektion der Pakete durch die Endgeräte L7-L12 anhand der Streamlet-ID SID-SID3 statt.

Die Koppel-Netzwerkknoten 7 und 8 für die Teilnetze 3 und 4 sind vorteilhafter Weise ebenfalls dazu ausgebildet und eingerichtet, eine solche Filterung anhand der Streamlet-ID durchzuführen, da es natürlich möglich ist, dass auch in diese eine gemeinsame geschützte Verbindung geht.

Die Endgeräte T und L1-L12 sowie die Koppel-Knoten 7-10 stellen jeweils Ausführungsbeispiele erfindungsgemäßer Geräte dar.

Durch die Berücksichtigung von Topologie-Informationen für eine optimale Stream-Einrichtung wird eine besonders effiziente Nutzung eines zur Verfügung stehenden Netzwerkes 1 möglich. Vor allem kann eine besonders optimale, effiziente Reservierung im Backbone-Teilnetz 2 erzielt werden. Im Vergleich zu der in FIG 2 dargestellten Situation mit einem Stream V für alle Teilnehmer muss nicht überall die für alle Streamlets benötigte Bandbreite reserviert werden. Dies hat sich als ganz besonders vorteilhaft für große Netzwerkausdehnungen erwiesen, denn die "Überreservierung" in einem solchen Fall wirkt sich umso stärker aus, je größer die Netzwerkausdehnung ist.

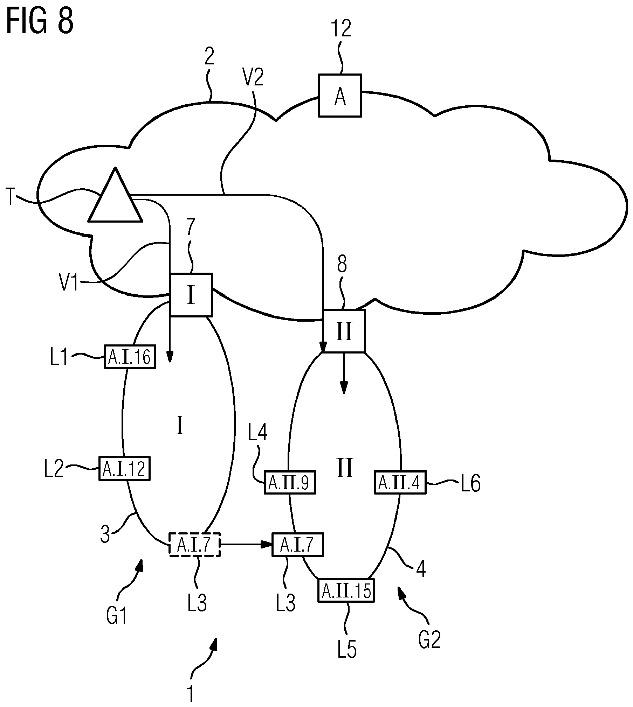

Es kann sein, dass ein Endgerät L1-L12 die Position im Netzwerk 1 ändert, also an einer anderen Stelle, etwa auch in einem anderen Teilnetzwerk 3-6 angeschlossen ist. Dies ist schematisch in der FIG 8 dargestellt, dort beispielhaft für den Listener L3, der von dem Subnetz 7 in das Subnetz 8 wechselt. Die FIG 8 zeigt nur eine Teildarstellung des Netzwerkes 1 gemäß den Figuren 5 und 6, konkret sind nur die Subnetze 7 und 8, nicht jedoch die Subnetze 9 und 10 erneut dargestellt. Wechselt ein Teilnehmer L1-L12 das Subnetz 3-6, ändert sich auch der Stream, an dem er teilnimmt, denn während dem Subnetz 7 der Stream V1 zugeordnet ist, ist dem Subnetz 8 der Stream V2 zugeordnet. Das bedeutet, der Listener L3 muss sich an einem anderen Stream mit einer anderen Stream-ID anmelden, konkret an V2 mit der IV STID2. Dafür erhält der Listener L3 eine neue Stream-ID STID2 und der Talker T sendet das Streamlet für L3 im Stream mit der Stream-ID STID2. Bei jedem Positionswechsel in eine neue Gruppe G1-G4 muss dabei erneut die Bandbreite BG1-BG3 der neuen Gruppe G1-G4 überprüft werden, und es muss ggf. ein zusätzlicher Stream bzw. ein Stream mit größerer Bandbreite bim Netzwerk 1 eingerichtet werden.

Es sei angemerkt, dass für den umgekehrten Fall, dass die Stream-Teilnehmer L1-L12 Talker darstellen und an den einen Stream-Initiator T Datenpakete senden wollten, völlig analog zu dem vorstehend beschriebenen Ablauf vorgegangen werden kann. Insbesondere sind die in FIG 7 dargestellten Schritte S1 bis S4 völlig analog und es wird lediglich in Schritt S5 kein Talker Advertise von einem einzelnen Talker abgesendet sondern ein Listener Advertise von dem dann einzelnen Listener, der von mehreren Talker Pakete empfangen will. Was die Abwicklung der Reservierung in einem solche Szenario einschließlich des Sendens eines Listener Advertises und der Talker Joins/Readies anstatt eines Talkers Advertises und Listener Joins/Readies angeht, sei auf die ebenfalls auf die Anmelderin zurückgehende europäische Patentanmeldung mit der Anmeldenummer 18154319.0 verwiesen.

Das koordinierte Senden der Datenpakete für ein Szenario mit mehreren Talkern als Stream-Teilnehmern, die über eine gemeinsame geschützte Verbindung an einen Listener als Stream-Initiator senden, erfolgt bevorzugt wie in der ebenfalls auf die Anmelderin zurückgehenden EP 3 432 097 A1 beschrieben. Insbesondere werden die Datenpakete zur Vermeidung von zeitlichen Konflikten von den Talkern jeweils in diesen zugeordneten senderseitigen Teilbereichen eines Zeitfensters gesendet.

Weiterhin sei angemerkt, dass in einem Netzwerk 1 neben den vorstehend beschriebenen, gruppierten Stream-Teilnehmern L1-L12 zugeordneten drei geschützten Verbindungen V1-V3, selbstverständlich weitere geschützte Verbindungen eingerichtet werden bzw. vorhanden sein können, sowohl weiteren Gruppen zugeordnete geschützte Verbindungen als auch klassische Streams gemäß Stand der Technik, auch für 1:1-Beziehungen. Dies ist in der FIG 6 angedeutet, in welche ein weiterer Stream V4 von einem zweiten Talker T2 in das Subnetz 8 geht.

Insbesondere für den Fall, dass die Datenpakete P mehrerer Streams V1-V4 in ein Teilnetzwerk 3-9 weitergegeben werden, erfolgt bevorzugt eine Filterung von Datenpaketen P durch die Endgeräte L1-L12. Eine Filterung kann dann bevorzugt anhand der Streamlet-ID SID1-SID3 erfolgen, wobei die Geräte L1-L12 jeweils nur Pakete P mit der oder den richtigen IDs verarbeiten und andere Pakete verwerfen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Datenübertragung in einem insbesondere industriellen Netzwerk (1) mit mehreren Netzwerkknoten (7-11), bei dem zwischen einem einen Stream-Initiator darstellenden Endgerät (T) und einer Mehrzahl von Stream-Teilnehmer darstellenden Endgeräten (L1-L12) insbesondere im Rahmen einer oder für eine Anwendung zyklisch Datenpakete (P) unter Nutzung wenigstens einer geschützten Verbindung (V1-V3) zu übertragen sind,
**dadurch gekennzeichnet, dass**
Topologie-Informationen (13) bereitgestellt werden (S1), welche die Positionen der Stream-Teilnehmer (11-L12) im Netzwerk (1) angeben oder von denen diese ableitbar sind, und die Stream-Teilnehmer (L1-L12) in Abhängigkeit ihrer jeweiligen Position im Netzwerk (1) in zwei oder mehr Gruppen (G1-G4) mit jeweils zwei oder mehr Stream-Teilnehmern (L1-L12) aufgeteilt werden (S2), und mehrere geschützte Verbindungen (V1-V3) eingerichtet werden (S3-S5), wobei jeder Gruppe (G1-G4) wenigstens eine geschützte Verbindung (V1-V3) zugeordnet wird, über die die Stream-Teilnehmer (L1-L12) der jeweilige Gruppe (G1-G4) Datenpakete (P) an den Stream-Initiator (T) senden oder Datenpakete (P) von dem Stream-Initiator (T) empfangen können oder empfangen.

2. Verfahren nach Anspruch 1,
**dadurch gekennzeichnet, dass**
die Gruppen (G1-G4) an unterschiedlichen Stellen im Netzwerk (1) angeschlossen sind, und/oder die Stream-Teilnehmer (L1-L12) wenigstens einer Gruppe (G1-G4) einander räumlich näher liegen als den Stream-Teilnehmern (L1-L12) wenigstens einer anderen Gruppe (G1-G4).

3. Verfahren nach Anspruch 1 oder 2,
**dadurch gekennzeichnet, dass**
jedem Stream-Teilnehmer (L1-L12) bekannt ist oder gegeben wird, welcher Gruppe (G1-G4) er angehört und/oder welche wenigstens eine geschützte Verbindung (V1-V3) seiner Gruppe (G1-G4) zugeordnet ist oder wird, und sich die Stream-Teilnehmer (L1-L12) der jeweiligen Gruppe (G1-G4) an wenigstens einer ihrer Gruppe (G1-G4) zugeordneten geschützten Verbindung (V1-V3) anmelden, wobei bevorzugt jeder geschützten Verbindung (V1-V3) ein eindeutiger Stream-Kenner (STID1-STID3) zugeordnet ist oder wird und den Stream-Teilnehmern (L1-L12) bekannt ist oder bekannt gegeben wird, welcher Stream-Kenner (STID1-STID3) zu der wenigstens einen ihrer Gruppe (G1-G4) zugeordneten geschützten Verbindung (V1-V3) gehört.

4. Verfahren nach einem der vorhergehenden Ansprüche,
**dadurch gekennzeichnet, dass**
von dem Stream-Initiator (T) für die Einrichtung der geschützte Verbindungen (V1-V3) für die verschiedenen Gruppen (G1-G4) für jede geschützte Verbindung (V1-V3) wenigstens eine Ankündigungsnachricht (A1-A3) gesendet wird, die im Netzwerk (1) verteilt wird, wobei die wenigstens eine Ankündigungsnachricht (A1-A3) für die jeweilige geschützte Verbindung (V1-V3) einen dieser zugeordneten eindeutigen Stream-Kenner (STID1-STID3) umfasst.

5. Verfahren nach einem der vorhergehenden Ansprüche,
**dadurch gekennzeichnet, dass**
die Einrichtung der geschützten Verbindungen (V1-V3) die Reservierung von Netzwerkressourcen an beteiligten Netzwerkknoten (7-11) umfasst.

6. Verfahren nach einem der vorhergehenden Ansprüche,
**dadurch gekennzeichnet, dass**
das Netzwerk (1) zwei oder mehr unterlagerte Teilnetzwerke (3-6) und wenigstens ein den unterlagerten Teilnetzwerken (3-6) übergeordnetes Teilnetzwerk (2) umfasst, und in zwei oder mehr der unterlagerten Teilnetzwerke (3-6) jeweils zwei oder mehr der Stream-Teilnehmer (L1-L12) liegen, und jeweils diejenigen Stream-Teilnehmer (L1-L12), die in einem unterlagerten Teilnetzwerk (3-6) liegen, zu einer Gruppe zusammengefasst werden.

7. Verfahren nach Anspruch 6,
**dadurch gekennzeichnet, dass**
das übergeordnete Teilnetzwerk (2) leistungsfähiger ist als die Gruppen-Teilnetzwerke (3-6).

8. Verfahren nach Anspruch 6 oder 7,
**dadurch gekennzeichnet, dass**
jedem Gruppen-Teilnetzwerk (3-6) ein Gruppen-Kenner zugeordnet ist.

9. Verfahren nach einem der Ansprüche 6 bis 8,
**dadurch gekennzeichnet, dass**
in jedem Gruppen-Teilnetzwerk (3-6) ein Stream-Teilnehmer (L1-L12) oder Netzwerknoten (7-11) als Gruppen-Koordinator dient, und von dem Gruppen-Koordinator eine Liste mit Kennern der Stream-Teilnehmer (L1-L12) in dem Teilnetzwerk (3-6) erstellt und diese bevorzugt einem übergeordneten Koordinator (12) übermittelt wird.

10. Verfahren nach einem der vorhergehenden Ansprüche,
**dadurch gekennzeichnet, dass**
die Topologie-Informationen eine Liste (13) mit Stream-Teilnehmern, die von dem Stream-Initiator (T) Datenpakete (P) über die wenigstens eine geschützte Verbindung (V1-V3) erhalten oder diesem Datenpakete (P) über die wenigstens eine geschützte Verbindung (V1-V3) senden wollen, umfassen oder durch eine solche gegeben sind, wobei die Liste (13) Namen der Stream-Teilnehmer (l1-L12) umfasst und die Namen oder Bestandteile dieser derart sind, dass von diesen die Position des jeweiligen Stream-Teilnehmers (L1-L12) im Netzwerk ableitbar ist.

11. Verfahren nach Anspruch 10,
**dadurch gekennzeichnet, dass**
die Stream-Teilnehmer (L1-L12) anhand ihrer Namen oder anhand von Bestandteilen ihrer Namen in Gruppen (G1-G4) unterteilt werden.

12. Verfahren nach einem der vorhergehenden Ansprüche,
**dadurch gekennzeichnet, dass**
die Topologie-Informationen (13) unter Verwendung eines Topologie-Erkennungsprotokolls und/oder eines Adressvergabe-Protokolls ermittelt werden.

13. Verfahren nach einem der vorhergehenden Ansprüche,
**dadurch gekennzeichnet, dass**
eine hierarchische Liste mit Endgerätepositionen aus Sicht des Stream-Initiators (T) erstellt und diese als Topologie-Informationen (13) oder als Bestandteil dieser bereitgestellt wird.

14. Verfahren nach einem der vorhergehenden Ansprüche,
**dadurch gekennzeichnet, dass**
über wenigstens eine einer Gruppe (G1-G4) zugeordnete geschützte Verbindung (V1-V3) zyklisch Datenpakete (P) von dem Stream-Initiator (T) an wenigstens zwei Stream-Teilnehmer (L1-L12) der Gruppe (G1-G4) gesendet werden, wobei der Stream-Initiator (T) für verschiedene Stream-Teilnehmer (L1-L12) der Gruppe (G1-G4) bestimmte Datenpakete (P) zeitlich versetzt sendet, und/oder über wenigstens eine einer Gruppe (G1-G4) zugeordnete geschützte Verbindung (V1-V3) zyklisch Datenpakete (P) von wenigstens zwei Stream-Teilnehmern (L1-L12) der Gruppe (G1-G4) an den Stream-Initiator (T) gesendet werden, wobei das Senden der Datenpakete (P) derart koordiniert erfolgt, dass diese zeitlich versetzt bei dem Stream-Initiator (T) ankommen.

15. Verfahren nach einem der vorhergehenden Ansprüche,
**dadurch gekennzeichnet, dass**
über wenigstens eine einer Gruppe (G1-G4) zugeordnete geschützte Verbindung (V1-V3) zyklisch Datenpakete (P) von dem Stream-Initiator (T) an wenigstens zwei Stream-Teilnehmer (L1-L12) der Gruppe (G1-G4) gesendet werden, wobei jedes Datenpaket (P) einen Paket-Kenner umfasst, und die Stream-Teilnehmer (L1-L12) jeweils nur Datenpakete (P-P8) verarbeiten, welche einen ihnen zugeordneten Stream-Kenner umfassen.

16. Verfahren nach einem der vorhergehenden Ansprüche,
**dadurch gekennzeichnet, dass**
für wenigstens zwei Gruppen (G1-G4) wenigstens eine gemeinsame geschützte Verbindung (V1-V3) eingerichtet wird, und über die wenigstens eine gemeinsame geschützte Verbindung (V1-V3) Datenpakete (P) an die Stream-Teilnehmer (L1-L12) der wenigstens zwei Gruppen (G1-G4) gesendet werden, wobei jeweils an einem einen Koppel-Netzwerkknoten (7-10) für die jeweilige Gruppe (G1-G4) darstellenden Netzwerkknoten (7-10) eine Filterung von Datenpaketen (P) erfolgt, wobei von dem jeweiligen Koppel-Netzwerkknoten (7-11) nur Datenpakete (P) an die Stream-Teilnehmer (L1-L12) der jeweiligen Gruppe (G1-G4) weitergeleitet werden, die für diese Gruppe (G1-G4) bestimmt sind.

17. Verfahren nach einem der vorhergehenden Ansprüche,
**dadurch gekennzeichnet, dass**
es sich bei dem Stream-Initiator (T) um eine Steuerung einer industriellen Anlage handelt und/oder bei den in Gruppen aufgeteilten Stream-Teilnehmern (L1-L12) jeweils um ein IO-Gerät oder einen Sensor oder einen Aktor oder ein einen Sensor und/oder Aktor umfassendes Gerät handelt, und/oder dass über die den Gruppen (G1-G4) zugeordneten geschützten Verbindungen (V1-V3) Datenpakete (P) gesendet werden, die mit Sensoren erfasste Messdaten und/oder für Aktoren bestimmte Steuerdaten insbesondere als Nutzdateninhalt umfassen.

18. Gerät zur Durchführung des Verfahrens nach einem der vorhergehenden Ansprüche.

19. Gerät nach Anspruch 18,
**dadurch gekennzeichnet, dass**
das Gerät (T) dazu ausgebildet und/eingerichtet ist, Topologie-Informationen (13), welche die Positionen der Stream-Teilnehmer (L1-L12) im Netzwerk (1) angeben oder von denen diese ableitbar sind, zu erhalten, und die Stream-Teilnehmer (L1-L12) in Abhängigkeit ihrer jeweiligen Position im Netzwerk (1) in zwei oder mehr Gruppen (G1-G4) mit jeweils zwei oder mehr Stream-Teilnehmern (L1-L12) aufzuteilen, und mehrere geschützte Verbindungen (V1-V3) einzurichten, wobei jeder Gruppe (G1-G4) wenigstens eine geschützte Verbindung (V1-V3) zugeordnet wird, über die die Stream-Teilnehmer (L1-L12) der jeweilige Gruppe (G1-G4) Datenpakete (P) an den Stream-Initiator (T) senden oder Datenpakete (P) von dem Stream-Initiator (T) empfangen können oder empfangen, oder das Gerät (L1-L12) dazu ausgebildet und/eingerichtet ist, mitgeteilt zu bekommen, welcher Gruppe (G1-G4) es angehört und/oder welche wenigstens eine geschützte Verbindung (V1-V3) seiner Gruppe (G1-G4) zugeordnet ist oder wird, und um sich an wenigstens einer seiner Gruppe (G1-G4) zugeordneten geschützten Verbindung (V1-V3) anzumelden, oder das Gerät (9, 10) dazu ausgebildet und/oder eingerichtet ist, in Abhängigkeit wenigstens eines in dem Datenbereich (D) von bei ihm ankommenden Datenpaketen (P) enthaltenen Kenners (SID1) eine Entscheidung zu treffen, ob die Datenpakete (P) an die Stream-Teilnehmer (L1-L12) einer Gruppe (G1-G4) weitergeleitet werden oder nicht.

20. Computerprogramm umfassend Programmcode-Mittel zur Durchführung des Verfahrens nach einem der Ansprüche 1 bis 17.

21. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 17 durchzuführen.
